# EUROPEAN PATENT APPLICATION

(11) **EP 2 505 611 A2**
(43) Date of publication of application: **03.10.2012**
(21) Application number: 10833490.5
(22) Date of filing: 01.11.2010
(51) Int. Cl.: C08L 77/02, C08K 7/14, C08L 51/06, C08J 5/00

(54) **ENVIRONMENTALLY-FRIENDLY POLYAMIDE RESIN COMPOSITION AND MOLDED PRODUCT USING SAME**

(30) Priority: 25.11.2009 KR 20090114805
(71) Applicant: Cheil Industries Inc., Kumi-city, Kyungsangbuk-do 730-030 (KR)
(72) Inventor: KWON, Young-Chul, Uiwang-si Gyeonggi-do 437-711 (KR); HA, Doo-Han, Uiwang-si Gyeonggi-do 437-711 (KR); JUNG, Chang-Do, Yeosu-si Jeollanam-do 555-210 (KR); LEE, Hyung-Tak, Uiwang-si Gyeonggi-do 437-711 (KR); LEE, Bong-Jae, Uiwang-si Gyeonggi-do 437-711 (KR)
(74) Representative: Bublak, Wolfgang
(86) International application number: PCT/KR2010/007609
(87) International publication number: WO 2011/065678

(57) **Abstract**

Provided are an environmentally-friendly polyamide resin composition that includes (A-1) a first polyamide resin including polyamide 11, polyamide 1010, or a combination thereof, (B) a glass fiber having a cross-sectional aspect ratio of 1.5 or more, and (C) a branched graft copolymer including a polyolefin main chain, and optionally (A-2) second polyamide resin including a C6 organic chain in one repeating unit, and a molded product using the same.

## Description

### Related Applications

This application is a continuation-in-part of International Application No. PCT/KR2010/007609, filed November 1, 2010, pending, which designates the U.S., published as WO 2011/065678, and is incorporated herein by reference in its entirety, and claims priority therefrom under 35 USC Section 120. This application also claims priority under 35 USC Section 119 from Korean Patent Application No. 10-2009-0114805, filed November 25, 2009, in the Korean Intellectual Property Office, the entire disclosure of which is also incorporated herein by reference.

### BACKGROUND

### 1. Field

This disclosure relates to an environmentally-friendly polyamide resin composition and a molded product using the same.

### 2. Description of the Related Art

Generally, when a thermoplastic resin is reinforced with a glass fiber, the thermoplastic resin has improved tensile strength and flexural strength while maintaining its intrinsic property of excellent formability. Particularly, as the thermoplastic resin has excellent flexural modulus and heat resistance, the thermoplastic resin comes to have characteristics that are appropriate for parts that continuously receive weight or have to endure continuous heat. Due to the characteristics, the thermoplastic resin reinforced with a glass fiber is being applied to a variety of parts for vehicles and electronic products.

However, since the thermoplastic resin reinforced with a glass fiber has a considerably decreased fluidity due to the addition of the glass fiber, it has a drawback in that the temperature has to be increased during an injection molding process. When the thermoplastic resin reinforced with a glass fiber is injection-molded, a plastic mold product formed of the thermoplastic resin reinforced with a glass fiber may be warped or twisted to deteriorate the quality of the plastic mold product due to a contraction rate difference in an injection direction and a vertical direction in a glass fiber direction originating from the flow of the thermoplastic resin reinforced with a glass fiber.

Moreover, compared with the state of the thermoplastic resin before a glass fiber is added thereto, impact resistance is decreased so much that the thermoplastic resin reinforced with a glass fiber is hardly used for parts that may be destroyed by external impact.

To overcome the problem of deteriorated impact resistance caused by the addition of the glass fiber, there is an attempt for adding an impact-reinforcing agent such as a core-shell graft copolymer to a polycarbonate resin. However, after the core-shell graft copolymer is added, the fluidity of the polycarbonate resin is deteriorated, and because of the deteriorated fluidity, the glass fiber is destroyed during an extruding process and impact resistance cannot be improved.

Also, since the thermoplastic resin is formed of a petroleum-based material, the amount of CO₂ generated is high, causing environmental pollution.

### SUMMARY

One aspect of the present invention provides an environmentally-friendly polyamide resin composition having excellent impact resistance, hardness, heat resistance, and warpage properties.

Another aspect of the present invention provides a molded product made using the environmentally-friendly polyamide resin composition.

One aspect of the present invention provides an environmentally-friendly polyamide resin composition that includes (A-1) 20 to 90 parts by weight of a first polyamide resin including polyamide 11, polyamide 1010, or a combination thereof; (A-2) 0 to 50 parts by weight of a second polyamide resin including a C6 organic chain in one repeating unit; (B) 9 to 80 parts by weight of a glass fiber having a cross-sectional aspect ratio of 1.5 or more; and (C) 1 to 5 parts by weight of a branched graft copolymer including a polyolefin main chain, based on the sum, 100 parts by weight of (A-1), (A-2), (B), and (C) components.

The first polyamide resin (A-1) may include a bio-polyamide resin derived from a vegetable fiber.

The second polyamide resin (A-2) may include polyamide 6, polyamide 66, or a combination thereof.

The glass fiber (B) may further include another glass fiber having a cross-sectional aspect ratio of less than 1.5.

The branched graft copolymer including a polyolefin main chain (C) may include a polyolefin main chain on which a reactive group including a (meth)acrylate group, a modified ester group, an arylate group, an acrylonitrile group, or a combination thereof is grafted, and the reactive group may include in an amount of 5 to 50 wt% based on the total amount of the branched graft copolymer including a polyolefin main chain (C).

The environmentally-friendly polyamide resin composition may further include 0.1 to 30 parts by weight of an additive including an antibacterial agent, a heat stabilizer, a release agent, a light stabilizer, an inorganic material additive, a surfactant, a coupling agent, a plasticizer, admixture, a weather-resistance agent, a colorant, a stabilizer, a lubricant, an antistatic agent, an colorant aid, a flameproofing agent, an ultraviolet (UV) absorber, an ultraviolet (UV) blocking agent, a filler, a nucleating agent, an adhesion aid, an adhesive, or a combination thereof, based on the sum, 100 parts by weight of the above (A-1), (A-2), (B), and (C) components.

Another aspect of the present invention provides a molded product made using the environmentally-friendly polyamide resin composition.

Hereinafter, further aspects of the present invention will be described in detail.

One embodiment provides a polyamide resin composition which is not only environmentally friendly but also has excellent impact resistance, hardness, heat resistance, and warpage properties. The polyamide resin may be applied to a variety of molding products. Particularly, it may be usefully applied to mold housing of electronic products or mold exteriors of vehicle commodities.

### BRIEF DESCRIPTION OF THE DRAWING

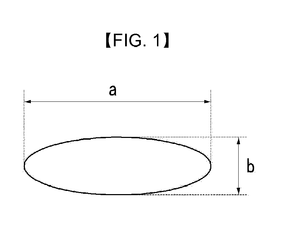

FIG. 1 is a schematic view showing a cross-sectional aspect ratio of a glass fiber according to one embodiment.

### DETAILED DESCRIPTION

Exemplary embodiments will hereinafter be described in detail. However, these embodiments are only exemplary, and the present invention is not limited thereto.

In the present specification, when specific description is not provided, the term "(meth)acrylate group" refers to an "acrylate group" and an "methacrylate group."

An environmentally-friendly polyamide resin composition according to one embodiment includes (A-1) a first polyamide resin including polyamide 11, polyamide 1010, or a combination thereof, (B) a glass fiber having a cross-sectional aspect ratio of 1.5 or more, and (C) a branched graft copolymer including a polyolefin main chain, and optionally (A-2) a second polyamide resin including a C6 organic chain in one repeating unit.

Each component included in the environmentally-friendly polyamide resin composition according to one embodiment will hereinafter be described in detail.

### (A-1) First polyamide resin

The first polyamide resin is a bio-polyamide resin.

The bio-polyamide resin is an environmentally-friendly material that may remarkably decrease the amount of CO₂ generated during the production of plastics, and it is vegetable fiber, specifically, non-food resources originating from castor which may be easily cultivated. The bio-polyamide resin satisfies the aspects of both environmentally-friendly property and application of non-food resources.

The bio-polyamide resin may be polyamide 11, polyamide 1010, or a combination thereof.

The polyamide 11 is manufactured from castor oil, which is vegetable oil, and since castor oil has a low absorption rate, it may be usefully applied to products requiring low dimensional stability. To be specific, the polyamide 11 may be manufactured from ricinoleic acid of castor oil by polycondensing an undecanoic acid.

The polyamide 1010 may be manufactured by condensing a sebacic acid obtained from castor oil and 1,10-decamethylenediamine obtained by aminating the sebacic acid, and the polyamide 1010 originates from 100% biomass.

Since the polyamide 11 and the polyamide 1010 have a low moisture absorption rate, they are stable against deformation during a molding process.

According to one embodiment, the polyamide 11 and the polyamide 1010 may not only be used alone but also used together in the form of a mixture. When they are used by being mixed together, the polyamide 11 may be included in a ratio of 50 to 99 wt% and the polyamide 1010 may be included in a ratio of 1 to 50 wt%. When the polyamide 11 and the polyamide 1010 are used in the above ratio in the mixture, impact resistance, heat resistance and hardness are improved.

The bio-polyamide resin may be included in an amount of 20 to 90 parts by weight, specifically 25 to 80 parts by weight, based on 100 parts by weight of environmentally-friendly polyamide resin composition, that is, the total amount of 100 parts by weight of (A-1) the first polyamide resin, (A-2) the second polyamide resin, (B) the glass fiber, and (C) the branched graft copolymer. When the bio-polyamide resin is included within the range, the environmentally-friendly polyamide resin composition has excellent environmentally-friendly property, impact resistance, hardness, and heat resistance.

### (A-2) Second polyamide resin

The second polyamide resin is a generally-used polyamide resin.

The generally-used polyamide resin may be optionally added to the environmentally-friendly polyamide resin composition according to one embodiment.

The generally-used polyamide resin includes an amide-group in the polymer main chain, and an amino acid, lactam or diamine, and dicarboxylic acid as main components that are polymerized to provide a polyamide.

Examples of the amino acid may be 6-aminocaproic acid, 11-aminoundecanoic acid, 12-aminododecanoic acid, paraaminomethylbenzoic acid, and the like. Examples of the lactam may be ε -caprolactam, ω-laurolactam, and the like, and examples of the diamine may be aliphatic, alicyclic or aromatic diamine of tetramethylenediamine, hexamethylenediamine, 2-methylpentamethylenediamine, nonamethylenediamine, undecamethylenediamine, dodecamethylenediamine, 2,2,4-trimethylhexamethylenediamine, 2,4,4-trimethylhexamethylenediamine, 5-methylnonamethylenediamine, metaxylenediamine, paraxylenediamine, 1,3-bis(aminomethyl)cyclohexane, 1,4-bis(aminomethyl)cyclohexane, 1-amino-3-aminomethyl-3,5,5-trimethylcyclohexane, bis (4-aminocyclohexyl)methane, bis (3-methyl-4-aminocyclohexyl)methane, 2,2-bis (4-aminocyclohexyl)propane, bis(aminopropyl)piperazine, aminoethylpiperazine, and the like. Examples of the dicarboxylic acid may be aliphatic, alicyclic or aromatic dicarboxylic acid such as adipic acid, suberic acid, azelaic acid, sebacic acid, dodecane2 acid, terephthalic acid, isophthalic acid, 2-chloroterephthalic acid, 2-methylterephthalic acid, 5-methylisophthalic acid, 5-sodiumsulfoisophthalic acid, 2,6-naphthalenedicarboxylic acid, hexahydroterephthalic acid, hexahydroisophthalic acid, and the like. A polyamide homopolymer or copolymer derived from a raw material may be used singularly or as a mixture.

A generally-used polyamide resin according to one embodiment may be a polyamide resin a C6 organic chain in one repeating unit thereof.

Such a polyamide resin may be polyamide 6, polyamide 66, or a combination thereof. The polyamide 6 refers to polycaprolactam and it includes a C6 organic chain represented by - CH₂₅CO- in one repeating unit, and the polyamide 66 refers to polyhexamethyleneadipamide and it includes a C6 organic chain represented by -CO CH₂₄CO- in one repeating unit.

By using the generally-used polyamide resin along with the above-described bio-polyamide resin, hardness and heat resistance may be improved while maintaining low moisture absorption rate.

The generally-used polyamide resin may be included in an amount of 0 to 50 parts by weight, specifically 5 to 50 parts by weight, and more specifically 10 to 50 parts by weight, based on 100 parts by weight of environmentally-friendly polyamide resin composition, that is, the total amount of 100 parts by weight of (A-1) the first polyamide resin, (A-2) the second polyamide resin, (B) the glass fiber, and (C) the branched graft copolymer. When the generally-used polyamide resin is included within the range, impact resistance, hardness, heat resistance and warpage properties are improved.

### (B) Glass fiber

The glass fiber used herein has a flat cross section and has a particular aspect ratio. FIG. 1 is a schematic view showing a cross-sectional aspect ratio of a glass fiber according to one embodiment. Referring to FIG. 1, the aspect ratio is defined as a ratio of the longest diameter (a) to the shortest diameter (b) in a cross section of the glass fiber.

The glass fiber used herein may have a cross-sectional aspect ratio of 1.5 or more, specifically, 2 to 8, and more specifically, 2 to 6. When the cross-sectional aspect ratio of the glass fiber has the range, fluidity decrement of the environmentally-friendly polyamide resin composition caused by the addition of the glass fiber is remarkably decreased, and the orientation effect of the glass fiber according to the flow of the polyamide resin is so small that the warpage properties of molding products manufactured from the environmentally-friendly polyamide resin composition may be improved.

The glass fiber may have a length of 2 to 13 mm, and specifically, it may have a length of 3 to 6 mm.

Also, a glass fiber having a cross-sectional diameter of 10 to 20 µm may be used.

According to one embodiment, the above-described glass fiber having a cross-sectional aspect ratio of greater than or equal to 1.5 may be mixed and used with a glass fiber having a cross-sectional aspect ratio of less than 1.5. When the mixture of the glass fibers is used, the glass fiber having a cross-sectional aspect ratio of 1.5 or more may be included in an amount of 20 to 99 wt%, and the glass fiber having a cross-sectional aspect ratio of less than 1.5 may be included in an amount of 1 to 80 wt%. When the glass fibers are used in the mixing ratio, the workability and impact resistance of the environmentally-friendly polyamide resin composition may be maintained excellently.

The glass fiber may be coated with a predetermined material to prevent a reaction of a polyamide resin and improve immersion degree.

The environmentally-friendly polyamide resin composition may have different overall fluidity and impact resistance according to the kind of the coating material. If any, the kind of the material coating the surface of the glass fiber and the fluidity and impact strength of the environmentally-friendly polyamide resin composition according to the kind of the coating are obviously known to a person of an ordinary skill in the art.

The glass fiber may be included in an amount of 9 to 80 parts by weight, specifically 20 to 70 parts by weight, based on 100 parts by weight of environmentally-friendly polyamide resin composition, that is, the total amount of 100 parts by weight of (A-1) the first polyamide resin, (A-2) the second polyamide resin, (B) the glass fiber, and (C) the branched graft copolymer. When the glass fiber is included in the above range, the hardness and heat resistance of the environmentally-friendly polyamide resin composition are improved and the fluidity is greatly improved as well so as to secure excellent formability.

### (C) Branched graft copolymer including a polyolefin main chain

The branched graft copolymer including a polyolefin main chain is a copolymer including a polyolefin main change grafted with a reactive group. It serves as an impact reinforcing material by improving the dispersion with a bio-polyamide resin, and it minimizes the cutting of the glass fiber by decreasing the friction with processing machine so as to improve impact resistance.

The polyolefin that forms the main chain may be polymerized from such monomers as ethylene, propylene, isopropylene, butylene, and isobutylene. Specifically, polyethylene, polypropylene, ethylene-propylene copolymer or a combination thereof may be used to be included in an amount of greater than or equal to 70 wt% based on the total amount of the main chain.

The reactive group grafted into the main chain may include those having partial compatibility with a bio-polyamide resin. Specifically, a (meth)acrylate group such as methyl(meth)acrylate, ethyl(meth)acrylate, and butyl(meth)acrylate; a modified ester group such as ethyleneglycol; an arylate group; an acrylonitrile group; or a combination thereof may be used.

The reactive group may be included in an amount of 5 to 50 wt% based on the total amount of the branched graft copolymer including the polyolefin main chain, specifically, 5 to 40 wt%. When the reactive group is included within the range, the compatibility with the bio-polyamide resin is excellent and the effect of impact reinforcement is great so as to improve impact resistance.

The branched graft copolymer including the polyolefin main chain may be included in an amount of 1 to 5 parts by weight, specifically 3 to 5 parts by weight, based on 100 parts by weight of environmentally-friendly polyamide resin composition, that is, the total amount of 100 parts by weight of (A-1) the first polyamide resin, (A-2) the second polyamide resin, (B) the glass fiber, and (C) the branched graft copolymer. When the branched graft copolymer including the polyolefin main chain is included within the range, the impact resistance and hardness of the environmentally-friendly polyamide resin composition are excellent.

### (D) Other additive

The environmentally-friendly polyamide resin composition according to one embodiment may further include an additive of an antibacterial agent, a heat stabilizer, a release agent, a light stabilizer, an inorganic material additive, surfactant, a coupling agent, a plasticizer, an admixture, a weather-resistance agent, a colorant, a stabilizer, a lubricant, an antistatic agent, a colorant aid, a flameproofing agent, an ultraviolet (UV) absorber, an ultraviolet (UV) blocking agent, a filler, a nucleating agent, an adhesion aid, an adhesive, or a combination thereof.

The release agent may include a fluorine-included polymer, a silicone oil, a metal salt of stearic acid, a metal salt of montanic acid, a montanic acid ester wax, or a polyethylene wax. The weather-resistance agent may include a benzophenone or amine weather-resistance agent, and the colorant may include a dye or pigment. In addition, the ultraviolet (UV) blocking agent may include titanium oxide (TiO₂) or carbon black, and the filler may include a glass fiber, carbon fiber, silica, mica, alumina, clay, calcium carbonate, calcium sulfate, or glass bead. When the filler is added, the properties such as a mechanical strength and a heat resistance or the like may be improved. The nucleating agent may include talc or clay.

The additive may be used while it does not damage to the properties of the environmentally-friendly polyamide resin composition depending on a use. For example the additive may be added in an amount of 0 to 30 parts by weight, more specifically 0.1 to 30 parts by weight, based on 100 parts by weight of environmentally-friendly polyamide resin composition, that is, the total amount of 100 parts by weight of (A-1) the first polyamide resin, (A-2) the second polyamide resin, (B) the glass fiber, and (C) the branched graft copolymer.

The environmentally-friendly polyamide resin composition according to one embodiment may be prepared through a method widely known to those skilled in the art. For example, the components and additives may be mixed, fused in an extruder, and extruded in the form of pellets.

According to another embodiment, a molded product is fabricated by molding the environmentally-friendly polyamide resin composition described above. The environmentally-friendly polyamide resin composition may be widely applied to the moldings of diverse products requiring impact resistance, hardness, heat resistance, and dimensional stability, such as, housing of mobile phones, laptops, and other small and precise electronic products, sports utilities, and exterior of vehicles.

The following examples illustrate the present invention in more detail. However, they are exemplary embodiments and are not limiting.

The environmentally-friendly polyamide resin composition according to one embodiment included the following components.

### (A-1) First polyamide resin

(A-1-1) As for polyamide 11, Rilsan KMVO of Arkema Corporation was used.
(A-1-2) As for polyamide 1010, Vestamid Terra DS of Evonik Corporation was used.

### (A-2) Second polyamide resin

As for polyamide 6, TP421 0 of Zigsheng Corporation was used.

### (B) Glass fiber

(B-1) As for a glass fiber having a cross-sectional aspect ratio of 4 (the longest diameter of 28 µm and shortest diameter of 7 µm) and a length of 3 mm, CSG 3PA-820 of Nitto Boseki Corporation was used.
(B-2) As for a glass fiber having a cross-sectional aspect ratio of 1 (diameter of 10 µm) and a length of 3 mm, P952 of Vetrotex Corporation was used.

### (C) Branched graft copolymer including a polyolefin main chain

Elvaloy 1224AC of Dupont Corporation was used.

### Examples 1 to 18 and Comparative Examples 1 to 8

The above components in amounts of shown in the following Tables 1 and 2 were extruded in a general twin-screw extruder and the extruded products were prepared in the form of pellets.

### (Experimental Examples)

Physical specimens were manufactured by drying pellets manufactured according to Examples 1 to 18 and Comparative Examples 1 to 8 at 100° C for 4 hours, and then injecting under the conditions of plastic temperature of 250 to 270° C and molding temperature of 60 to 80° C with a 10-oz injection molding machine. The physical properties of the physical specimens were measured in the following methods and then the measurement results were shown in the following Tables 1 and 2.
(1) Impact strength (1/8") was measured according to ASTM D256.
(2) Flexural hardness was measured according to ASTM D790 (2.8 mm/min).
(3) Thermal distortion temperature was measured according to ASTM D648 (18.56 kgf).
(4) Warpage: square specimens of 6" X 6" X 1/16" thin film were injected and their extents of warpage after discharge were decided.
Extent of warpage: 0 (no warpage) → 5 (severely warped)

**(Table 1)**

| The following parts by weight units were respectively represented based on 100 parts by weight of (A-1), (A-2), (B) and (C) components. | | | | | | | | | | | | | | | | | | | | |
|---|---|---|---|---|---|---|---|---|---|---|---|---|---|---|---|---|---|---|---|---|
| | | unit | Examples | | | | | | | | | | | | | | | | | |
| | | | 1 | 2 | 3 | 4 | 5 | 6 | 7 | 8 | 9 | 10 | 11 | 12 | 13 | 14 | 15 | 16 | 17 | 18 |
| (A-1) | (A-1-1) | parts by weight | 24 | 34 | 48 | 58 | 66 | 76 | 86 | 50 | 19 | 29 | 38 | 48 | 57 | - | - | 29 | - | 69 |
| | (A-1-2) | parts by weight | - | - | - | - | - | - | - | - | - | - | - | - | - | 29 | 48 | - | 29 | - |
| (A-2) | | parts by weight | - | - | - | - | - | - | - | - | 48 | 38 | 29 | 19 | 10 | 38 | 19 | 5 | 5 | - |
| (B) | (B-1) | parts by weight | 72 | 62 | 48 | 38 | 29 | 19 | 9 | 49 | 29 | 29 | 29 | 29 | 29 | 29 | 29 | 62 | 62 | 30 |
| | (B-2) | parts by weight | - | - | - | - | - | - | - | - | - | - | - | - | - | - | - | - | - | - |
| (C) | | parts by weight | 4 | 4 | 4 | 4 | 5 | 5 | 5 | 1 | 4 | 4 | 4 | 4 | 4 | 4 | 4 | 4 | 4 | 1 |
| Impact strength | | kg · c m/cm | 30 | 30 | 30 | 25 | 22 | 20 | 16 | 27 | 9 | 10 | 10 | 12 | 16 | 12 | 12 | 27 | 15 | 18 |
| Flexural hardness | | kgf/cm2 | 12 | 10 | 8 | 7 | 5.5 | 5.2 | 5.2 | 8.5 | 7.5 | 7 | 6.7 | 6.2 | 6.0 | 7.3 | 7.3 | 11 | 15 | 6.0 |
| Thermal distortion Temperature | | °C | 18 0 | 18 0 | 18 0 | 18 0 | 18 0 | 18 0 | 18 0 | 18 0 | 19 0 | 19 0 | 18 5 | 18 4 | 18 2 | 19 2 | 18 8 | 18 0 | 19 0 | 18 0 |
| Warpage | | - | 0 | 0 | 0 | 0 | 0 | 0 | 0 | 0 | 0 | 0 | 0 | 0 | 0 | 0 | 0 | 0 | 0 | 0 |

**(Table 2)**

| | | unit | Comparative Examples | | | | | | | |
|---|---|---|---|---|---|---|---|---|---|---|
| | | | 1 | 2 | 3 | 4 | 5 | 6 | 7 | 8 |
| (A-1) | (A-1-1) | parts by weight | 14 | 91 | 70 | 64 | 67 | - | - | 66 |
| | (A-1-2) | parts by weight | - | - | - | - | - | - | - | - |
| (A-2) | | parts by weight | - | - | - | - | - | 70 | 70 | - |
| (B) | (B-1) | parts by weight | 82 | 5 | 30 | 27 | - | 30 | - | 28 |
| | (B-2) | parts by weight | - | - | - | - | 29 | - | 30 | - |
| (C) | | parts by weight | 4 | 4 | - | 9 | 4 | - | - | 6 |
| Impact strength | | kg · cm/cm | Impossible to be extruded | 4 | 6 | 16 | 13 | 7 | 7 | 20 |
| Flexural hardness | | kgf/cm2 | | 1.7 | 7.0 | 4.0 | 5.5 | 7.6 | 7.5 | 4.2 |
| Thermal distortion temperature | | °C | | 50 | 180 | 180 | 180 | 210 | 210 | 180 |
| Warpage | | - | | 0 | 2 | 1 | 3 | 2 | 5 | 1 |

It may be seen from Tables 1 and 2 that bio-polyamide resin, a glass fiber having a cross-sectional aspect ratio of 1.5 or more, a branched graft copolymer including a polyolefin main chain, and Examples 1 to 18 optionally including a generally-used polyamide resin in accordance with one embodiment had excellent impact resistance, hardness, heat resistance, and warpage properties.

Particularly, it may be seen that hardness and heat resistance were improved even more in case of Examples 9 to 17 using a generally-used polyamide resin such as polyamide 6 together.

On the other hand, Comparative Example 1 where a glass fiber was used in an amount out of the range suggested in one embodiment cannot be extruded and thus no physical properties were obtained, and Comparative Example 2 where bio-polyamide resin and a glass fiber were used in the amounts out of the range had deteriorated impact resistance, hardness, and heat resistance. Also, it may be seen that Comparative Examples 3 and 4 where a branched graft copolymer including a polyolefin main chain was not used at all or was used in an amount out of the range suggested in one embodiment had deteriorated impact strength and hardness, respectively. Also, it may be seen that Comparative Example 5 where a glass fiber having a cross-sectional aspect ratio of less than 1.5 was used had deteriorated warpage properties, and Comparative Examples 6 and 7 where a bio-polyamide resin and a branched graft copolymer including a polyolefin main chain were not used had deteriorated impact resistance and warpage properties. Also, it may be seen that Comparative Example 8 where a branched graft copolymer including a polyolefin main chain was used in an amount out of the range suggested in one embodiment had deteriorated hardness.

Therefore, it may be seen that the environmentally-friendly polyamide resin composition according to one embodiment is balanced in the aspects of an environmentally-friendly property and excellent physical properties of impact resistance, hardness, heat resistance, and warpage.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be exemplary but not limiting the present invention in any way.

## Claims

1. An environmentally-friendly polyamide resin composition, comprising:
(A-1) 20 to 90 parts by weight of a first polyamide resin including polyamide 11, polyamide 1010, or a combination thereof, based on the sum, 100 parts by weight of the (A-1), (A-2), (B), and (C) components;
(A-2) 0 to 50 parts by weight of a second polyamide resin including a C6 organic chain in one repeating unit, based on the sum, 100 parts by weight of the (A-1), (A-2), (B), and (C) components;
(B) 9 to 80 parts by weight of a glass fiber having a cross-sectional aspect ratio of 1.5 or more, based on the sum, 100 parts by weight of the (A-1), (A-2), (B), and (C) components; and
(C) 1 to 5 parts by weight of a branched graft copolymer including a polyolefin main chain, based on the sum, 100 parts by weight of the (A-1), (A-2), (B), and (C) components

2. The environmentally-friendly polyamide resin composition of claim 1, wherein the first polyamide resin (A-1) comprises a bio-polyamide resin derived from a vegetable fiber.

3. The environmentally-friendly polyamide resin composition of claim 1, wherein the second polyamide resin (A-2) comprises polyamide 6, polyamide 66, or a combination thereof.

4. The environmentally-friendly polyamide resin composition of claim 1, wherein the glass fiber (B) further comprises another glass fiber having a cross-sectional aspect ratio of less than 1.5.

5. The environmentally-friendly polyamide resin composition of claim 1, wherein the branched graft copolymer including a polyolefin main chain (C) comprises a polyolefin main chain on which a reactive group including a (meth)acrylate group, a modified ester group, an arylate group, an acrylonitrile group, or a combination thereof is grafted.

6. The environmentally-friendly polyamide resin composition of claim 5, wherein the reactive group is included in an amount of 5 to 50 wt% based on the total amount of the branched graft copolymer including a polyolefin main chain (C).

7. The environmentally-friendly polyamide resin composition of claim 1, wherein the environmentally-friendly polyamide resin composition further comprises 0.1 to 30 parts by weight of an additive including an antibacterial agent, a heat stabilizer, a release agent, light stabilizer, an inorganic material additive, a surfactant, a coupling agent, a plasticizer, admixture, a weather-resistance agent, a colorant, a stabilizer, a lubricant, an antistatic agent, an colorant aid, a flameproofing agent, an ultraviolet (UV) absorber, an ultraviolet (UV) blocking agent, a filler, a nucleating agent, an adhesion aid, an adhesive, or a combination thereof, based on the sum, 100 parts by weight of the (A-1), (A-2), (B), and (C) components.

8. A molded product made using the environmentally-friendly polyamide resin composition of any one of claims 1 to 7.
